(19) Europäisches Patentamt
European Patent Office
Office européen des brevets

(11) EP 0 513 889 B1

(12) EUROPEAN PATENT SPECIFICATION

(45) Date of publication and mention
of the grant of the patent:
**06.11.1996 Bulletin 1996/45**

(51) Int Cl.6: **C08F 218/10**, C08F 218/08

(21) Application number: **92201173.9**

(22) Date of filing: **27.04.1992**

(54) **Polymer latices from vinyl acetate and vinyl esters of branched chain carboxylic acids**

Polymer-Latice von Vinylacetat und Vinylester von verzweigter Karboxylsäure

Latices de polymères d'acétate de vinyle et d'esters vinyliques d'acides carboxyliques ramifiés

(84) Designated Contracting States:
**BE CH DE ES FR GB IT LI NL PT SE**

(30) Priority: **02.05.1991 GB 9109483**

(43) Date of publication of application:
**19.11.1992 Bulletin 1992/47**

(73) Proprietor: **SHELL INTERNATIONALE
RESEARCH MAATSCHAPPIJ B.V.
2596 HR Den Haag (NL)**

(72) Inventors:
• **Coppin, Linda Louise-Marie Guillaume
B-1348 Ottignies Louvain-La-Neuve (BE)**
• **Slinckx, Martine Madeleine Christiane Pierre
B-1348 Ottignies Louvain-La-Neuve (BE)**
• **Scholten, Henricus Paulus Hubertus
B-1348 Ottignies Louvain-La-Neuve (BE)**

(56) References cited:
**EP-A- 0 315 278        FR-A- 1 490 013**

Remarks:
The file contains technical information submitted
after the application was filed and not included in this
specification

## Description

This invention relates to polymers from vinyl acetate and vinyl esters of branched chain carboxylic acids, to latices containing such polymers, to the preparation of such polymers by means of colloid stabilized emulsion polymerization, to coating compositions comprising such latices and to solid polymeric products, for example redispersible latex powders formed by drying of such latices.

Vinyl esters of branched carboxylic acids are manufactured and sold by for instance the applicant company (Shell) under the trademark "VeoVa". From the VeoVa Technical Manual VM 2.1, Technical Bulletin issued June 1988 and VM 3.2, Technical Bulletin issued December 1988, polymers are known, obtainable by emulsion polymerization in the presence of a protecting colloid of a starting comonomer mixture comprising vinyl acetate and a vinyl ester of a branched chain carboxylic acid containing 9 carbon atoms in the chain ("VeoVa 9"), and/or such a vinyl ester containing 10 carbon atoms in the chain ("VeoVa 10"). Colloid-protected latices prepared from these polymers have a number of excellent properties such as: ease of manufacturing; good film formation; high outdoor durability; good alkali resistance; good pigment binding power; and permanent flexibility. Such polymers are accordingly widely used in the indoor and outdoor emulsion paint market.

EP-A-315 278 discloses latices comprising vinyl acetate, the vinyl ester of one or more tertiary carboxylic acids, a copolymerisable stabilizer, such as vinyl acetate and one or more esters of acrylic or alkylacrylic acid. The ester group of the latter compounds are saturated. The latices may be stabilized by colloids, such as hydroxy ethyl cellulose. The example in this document discloses the use of VeoVa 9 and VeoVa 10 in conjunction with vinyl acetate.

For certain types of emulsion paint, e.g. glossy paints and woodstains, an improved level of water resistance is required together with a block resistant film. It was found that polymers from vinyl acetate and VeoVa 10 in conjunction with VeoVa 9 proved a satisfactory solution. Nevertheless, there remained a demand for polymers resulting in a film of at least the same hardness, with a further improved level of water resistance, and -due to environmental considerations- enhanced degree of conversion (lesser amount of unreacted monomers).

As a result of extensive research and experimentation there were surprisingly found such polymer compositions aimed at, showing a very attractive combination of properties, such as high monomer conversion and the chemical stability, alkali resistance, light resistance, water absorption and water spot of the latex film.

Accordingly, a group of polymers is provided characterized in that they are obtainable by emulsion polymerization in the presence of a colloid stabilizer, from a starting comonomer mixture, comprising:

(I) the vinyl ester of a tertiary aliphatic carboxylic acid in which the acid moiety contains 10 carbon atoms;
(II) vinyl pivalate;
(III) vinyl acetate;

the amounts of components (I), (II) and (III), being calculated relative to the total weight of the sum of the amounts of these components, are simultaneously fulfilling the following equations, each describing compositions having equal performance contour lines in a triangle diagram:

$$(i) \quad CONV. = 99.0\, x_1 + 98.8\, x_2 + 99.2\, x_3 - 0.4\, x_1 x_2 + 1.2\, x_1 x_3$$
$$+ 0.8\, x_2 x_3 + 6\, x_1 x_2 x_3$$

$$(ii) \quad T_g = 66\, x_1 - 2\, x_2 + 40\, x_3 - 28\, x_1 x_2 - 28\, x_1 x_3$$
$$- 12\, x_2 x_3 + 159\, x_1 x_2 x_3$$

$$(iii) \quad WA = 28\, x_1 + 18\, x_2 + 124\, x_3 - 20\, x_1 x_2 - 240\, x_1 x_3$$
$$- 132\, x_2 x_3 + 321\, x_1 x_2 x_3$$

$$(iv) \quad WSR = 10\, x_1 + 4\, x_2 + 2\, x_3 - 4\, x_1 x_2 + 12\, x_1 x_3 + 4\, x_2 x_3$$
$$- 18\, x_1 x_2 x_3,$$

wherein CONV. represents the monomer conversion at the exemplified conditions relative to monomer intake being at least 99%, wherein $T_g$ represents the glass transition temperature being in the range of from 10 °C to 40 °C, and measured by D.S.C. (Differential Scanning Calorimetry), WA represents the water absorption value being at most 50% measured as specified hereinafter and wherein WSR represents the water spot resistance being at least 5 after 24 hours as specified hereinafter, wherein $x_1$ represents the weight percentage of component I), $x_2$ represents the weight percentage of component (II), $x_3$ represents the weight percentage of component (III), the values of $x_1$, $x_2$ and $x_3$ being calculated on the total weight of components (I), (II) and (III).

The exact values of the coefficients in equations (i) to (iv) are slightly dependent upon the specific types of the applied stabilizing colloid, such as hydroxyethyl cellulose (hereinafter HEC), polyvinyl alcohol (PVA) and polyvinyl pyrrolidone (PVP), and the concentration thereof, usually in the range of from 1 to 4% by weight relative to the weight of monomers. However, it was found that such coefficients will vary only in a minor degree under usual emulsion polymerization conditions.

In this context reference is made to copending European application 92201174.7 (EP-A-516 201) claiming the polymerisation products of specific amounts of (I), (II) and (III) in the presence of a stabilizing monomer, such as (meth) acrylic acid, (meth)acrylamide, diacetone acrylamide and sodium vinyl sulphonate.

According to a preferred embodiment of the present invention, polymers are provided which are derivable from the components (I), (II) and (III) by emulsion polymerization in the presence of 2% by weight relative to the monomer weight of HEC ("Natrosol 250 L", a trade mark).

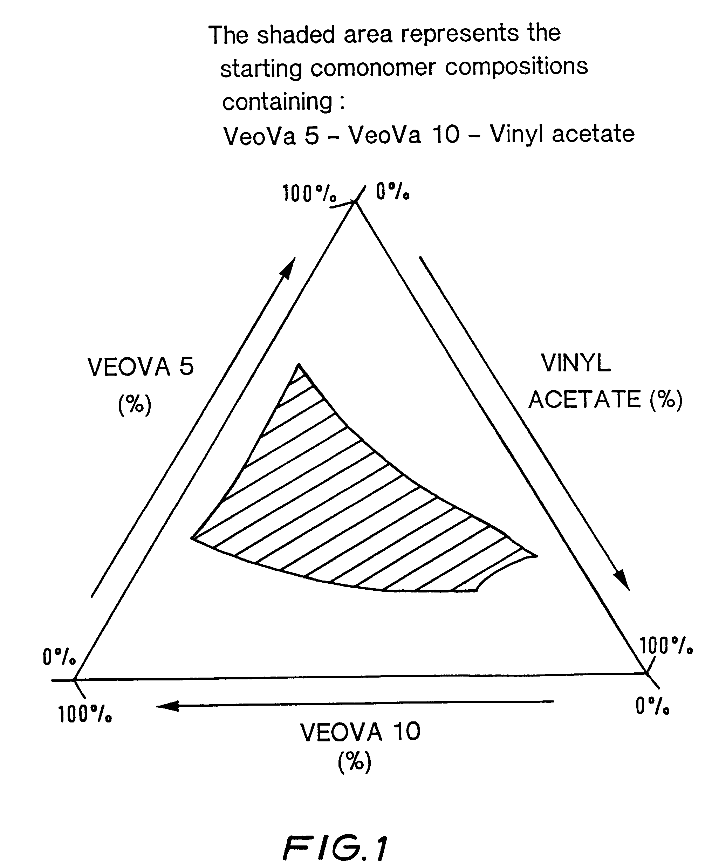

It will be appreciated by a person skilled in the art that starting comonomer compositions containing monomers (I), (II) and (III) in proportions meeting the aforementioned equations (i) to (iv), are represented by the shaded area in figure 1.

It will be appreciated that the starting comonomers vinyl pivalate and vinyl ester mentioned under (I) will normally have been prepared from technical mixtures obtained by hydroformylation of alkene mixtures. Therefore the starting main component (I) to be applied for latices according to the present invention is composed of several isomers and are accompanied by minor amounts (< 5%) of homologues. The starting main component (II) is consisting of only one isomeric constituent which is accompanied by minor amounts (< 5%) of homologues. However, said minor amounts of accompanying or homologues compounds were found not to interfere with the copolymerization process according to the present invention.

As component (I) preferably VeoVa 10, and as component (II) preferably VeoVa 5 is used.

A more preferred group of polymers are derivable from comonomer mixtures, wherein the weight fractions $x_1$, $x_2$ and $x_3$ of these components (I), (II) and (III) simultaneously fulfil the equations (i) to (iv), wherein CONV. still has a value of at least 99%, but wherein $T_g$ now has a value in the range from 10 °C to 30 °C, WA now has a value of at most 30% and wherein WSR has a value of at least 5.

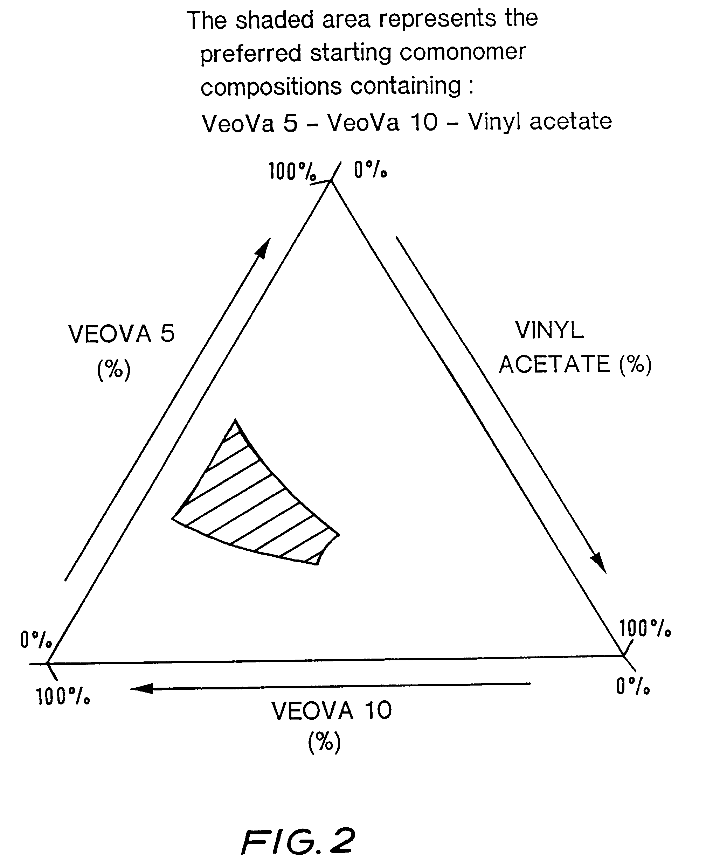

It will be appreciated that said preferred starting comonomer compositions, containing the comonomers (I), (II) and (III) in the suitable proportions meeting the aforementioned preferred requirements are represented by the shaded area in figure 2.

It was found that said area in figure 2, obtained by emulsion copolymerization in the presence of 2% by weight, based on comonomers content of HEC ("Natrosol 250 L") was hardly changed when other colloid stabilizers were used in the same concentration, such as polyvinyl acetate, PVA and PVP.

The most preferred embodiment of the polymers of the present invention is formed from the monomer compositions comprising:

(I)      from 35 to 64% by weight of VeoVa 10;
(II)      from 19 to 49% by weight of vinyl pivalate;
(III)      from 8 to 40% by weight of vinyl acetate;

the sum of components (I), (II) and (III) being 100%.

It will be appreciated that due to the aforementioned high monomer conversion, the latices obtained show an attractively low free monomer content, based on the solid content and substantially no unattractive smell or odour, which means an advantage over similar prior art coating compositions comprising such latices.

It will be appreciated that the present invention is also relating to latices, containing as polymeric constituent from 30 to 60% by weight of an polymer as described above and more preferably those wherein the polymeric constituent amounts from 40 to 55% by weight, to coating compositions comprising a latex and preferably at least one pigment and to solid polymeric products formed by physical drying of latices or coatings and to redispersible latex powders, formed by physical drying of such latices and to coating compositions derived from such powders.

A further aspect of the present invention relates to a process for the preparation of latices containing the aforementioned specified polymers.

It was surprisingly found in addition that these attractive results could be reached by effecting thermal initiation of the starting reaction mixture but not with redox initiation. The results obtained were found to be rather independent on the actual relative proportions of the components (I)-(III) in the indicated ranges.

The polymers containing latices according to the present invention may be prepared under conditions which are known in the art and generally involve a temperature of from 20 to 100 °C. More particularly the preparation process is carried out in a temperature range of from 75-85 °C.

Accordingly, the invention provides a process for the preparation of latices containing the polymers of the present invention by emulsion polymerization of the comonomer mixtures by thermal initiation, at a temperature in the range from 20 to 100 °C and preferably in the range of from 75 to 85 °C and in the presence of a stabilizing colloid such as hydroxyethyl cellulose, polyvinyl alcohol and polyvinyl pyrrolidone, in a concentration of 2% by weight, relative to the monomer weight and in the presence of a buffering agent.

Stabilizers suitably constitute 2-8% by weight, calculated relative to the total weight of the monomer constituents. Suitable stabilizers and the amount they are used in are well-known in the art and described in for instance the aforementioned Technical Manual, EP-A-295 727, and in Emulsifiers and detergents, international edition, volume 1 (by Mc Cutcheon, The Manufacturing Confectioner Publishing Co., Glen Rock NY, USA 1990). Preferably an anionic and a non-ionic surface active agent are used. Especially preferred is the use of an alkylaryl sulphonate together with an ethoxylated nonylphenol (e.g., "Arkopol N230", a trademark).

Accordingly, in the process of preparing the above latices as stabilizer at least one anionic surface active agent and optionally a non-ionic surface active agent is used in an amount of from 2 to 8% by weight relative to the weight of the latex.

Likewise suitable free radical initiators, radical formation accelerators, buffering agents and their relative amounts are also well-known in the art and disclosed in the above cited Technical Manual and European patent application.

Accordingly, the present invention also provides a process for preparing the latices above in which as initiators are used hydrogen peroxide and sodium, ammonium or potassium persulphate in an amount of from 0.4 to 0.7% by weight, based on the weight of the reaction mixture.

According to a preferred embodiment of the process of the present invention, an emulsion premix is prepared in demineralized water from a part of one or more surface active agents, a stabilizing colloid, a part of one or more radical initiators, a buffer and comonomers. If desired, the reactor is flushed with nitrogen and filled with an equal amount of demineralized water, and the remaining amounts of the surface active agent(s) and initiator.

The reactor is heated to a temperature in the specific range e.g. 80 °C. The reactor charge is heated up. When the temperature reaches 50-60 °C, 10% of the monomer mixture is added. Polymerization will start and the temperature will rise to 80 °C. The further addition of monomers is started. The addition is normally extended over a period of 2 to 5 hours during which the originally adjusted temperature is maintained. The addition of initiator is started at the same time and is continued for 2 a similar period as for the monomer addition.

A post polymerization period after termination of the addition of monomers of 1 to 3 hours is normally used at a temperature of e.g. 80 °C. After this post polymerization, the latex obtained is cooled and if necessary filtered.

The generally obtained latices have a total solids content in the range of from 30-60% by weight of the latex and preferably from 40-55% and a weight average particle diameter in the range of from 300-800 nm depending on the type of colloid and surfactants.

A further aspect of the present invention relates to a latex produced by the process described above, and the polymer which forms on physical drying of such a latex, for example to form a coating on a substrate or a powder intended for reconstitution as a latex or use in a concrete or other latex based end product.

Latices in accordance with the invention may find application in concretes, lacquers, paints, wood coatings, anti-corrosive paints and textured coatings. They are of particular interest for composing lacquers and paints due to their good film forming properties, their water resistance, their high pigment binding power, flexibility, the lack of tackiness of the films, their alkali resistance and resistance to ultra violet light. Paints containing the latices of the invention contain pigments, and will commonly contain further constituents, examples being fillers, co-solvents, thickeners, dispersants, preservatives, corrosion inhibitors, and anti-foaming agents.

It will be appreciated therefore that coating compositions, comprising the latices according to the present invention and solid polymer product formed thereof, also form an aspect of the present invention.

The invention will now be further described with reference to the following examples.

EXAMPLES

In a one litre reaction flask, provided with a central and four peripheral glass openings fitted with a reflux condenser, stirrer, thermometer, as monomer and initiator inlet tubes, heated in a water bath to 80 °C, an initial charge was inserted, composed of the following ingredients in the specified amounts.

| Initial reactor charge | |
|---|---|
| Water, demineralized | 185.0 grams |
| Humifen SF90, 10% aqueous solution (Humifen is a trade mark) | 12.5 |
| Arkopal N230, 25% aqueous solution | 25.0 |
| Potassium persulphate | 0.25 |
| Borax | 1.25 |
| HEC (Natrosol 250 L) | 5.00 |
| Acetic acid | 0.50 |

The reactor is kept at a temperature of from 60 to 70 °C under stirring and 10% of the total mixture (250.0 g) of VeoVa 5, VeoVa 10 and vinyl acetate in the desired predetermined weight ratio was added.

This mixture will start to polymerize and the temperature rose to 80 °C. Addition of the remaining monomer mixture took place in two hours.

A 1.5 ml portion of the initiator solution composed of:

| Potassium persulphate | 0.58 grams |
|---|---|
| Water, demineralized | 30.0 grams |

was added every 15 minutes. At the end of the monomer addition, the remainder of initiator solution was added. The reaction temperature was kept at 80 °C for another two hours.

The obtained latex was cooled and filtered if necessary.

Latices starting from several different monomer weight ratios as specified in the table were prepared and tested as to water absorption and water spot resistance of the latex polymer film, whereas monomer conversion, particle size, viscosity, minimum film formation temperature, and glass transition temperature were measured, as specified in the table.

COMPARATIVE EXAMPLE A

The above procedure was followed, however now using VeoVa 9 instead of VeoVa 5 for the formulation described in example V. In particular the monomer conversion, the MFT and Tg of these latices are (slightly) worse than the examples using similar amounts of VeoVa 5.

TABLE

| Colloid-stabilized latex references | I | II | III | IV | V | A |
|---|---|---|---|---|---|---|
| **Monomer composition (weight %)** | | | | | | |
| VeoVa 5 | 41 | 40 | 30 | 30 | 30 | - - |
| VeoVa 10 | 42 | 50 | 50 | 50 | 50 | 50 |
| VeoVa 9 | - - | - - | - - | - - | - - | 30 |
| Vinyl acetate | 17 | 10 | 20 | 20 | 20 | 20 |
| Protective colloid | HEC | HEC | HEC | PVA | HEC | HEC |
| (2% on monomer content) | | | | | | |
| **Latex properties** | | | | | | |
| Conversion (% on monomer intake) | 99.4 | 99.2 | 99.3 | 99.2 | 99.1 | 98.4 |
| Solid content in % | 50.5 | 56.2 | 50.4 | 51.2 | 50.7 | 50.7 |
| Minimum film forming temperature | 28 | 17 | 25 | 18 | 25 | 25 |
| (deg. C) | | | | | | |
| **Polymer properties** | | | | | | |
| $T_g$ (deg. C) measured by D.S.C. | 29 | 23 | 29 | 26 | 28 | 19 |
| Water spot resistance (24 H exposure) | 6 | 6 | 7 | 6 | 5 | 7 |
| Water absorp. in % | 22.0 | 21.3 | 28.4 | 19.3 | | |
| (thick film - 14 days) | | | | | | |

6

TEST METHODS

The water absorption of latex polymer and emulsion paint films (Thick film test method) was measured as described hereinafter.

A wet film of 2 mm thickness is applied on a polyethylene foil (the latex is kept on the foil by applying an automotive sealer on the edges of the foil). To avoid a too fast evaporation of water and as a result severe mud-cracking the panels are covered with some water vapour transmitting material and then stored at 20 °C above the Tg for a week. The cover is removed after clear films are formed. Three pieces of 2 x 2 cm are cut from the film after removal from the glass panel and weighed to the nearest 0.1 mg. These are stored in demineralized water at 23 °C and reweighed after 14 days (after removal of the excess of water by filter paper). The water absorption is calculated from the observed weight increase. The result of the triplicate measurements are averaged.

The water spot resistance of latex polymer films was measured as described hereinafter.

A wet latex film of 200 $\mu$m (micron) is applied on a glass panel and allowed to dry for a week at 20 °C above the $T_g$. When cooled to 23 °C a drop of water is brought on the film and the panel is placed on a dark underground. After 24 hours the whitening effect is visually judged. A rating between 10 (film is unaffected) and 0 (film is completely white) is given. In order to avoid evaporation of the water droplet, it can be covered overnight by a watch glass.

## Claims

**Claims for the following Contracting States : BE, CH, LI, DE, FR, GB, IT, NL, PT**

1. Polymers obtainable by emulsion polymerization in the presence of a protecting colloid, of a starting comonomer mixture comprising:

   (I)     the vinyl ester of a tertiary aliphatic carboxylic acid in which the acid moiety contains 10 carbon atoms;
   (II)    vinyl pivalate;
   (III)   vinyl acetate;

   the amounts of components (I), (II) and (III), being calculated relative to the total weight of the sum of the amounts of these components, are simultaneously fulfilling the following equations, each describing compositions having equal performance contour lines in a triangle diagram:

   $$(i) \quad CONV. = 99.0\, x_1 + 98.8\, x_2 + 99.2\, x_3 - 0.4\, x_1 x_2 + 1.2\, x_1 x_3$$
   $$+ 0.8\, x_2 x_3 + 6\, x_1 x_2 x_3$$

   $$(ii) \quad T_g = 66\, x_1 - 2\, x_2 + 40\, x_3 - 28\, x_1 x_2 - 28\, x_1 x_3$$
   $$- 12\, x_2 x_3 + 159\, x_1 x_2 x_3$$

   $$(iii) \quad WA = 28\, x_1 + 18\, x_2 + 124\, x_3 - 20\, x_1 x_2 - 240\, x_1 x_3$$
   $$- 132\, x_2 x_3 + 321\, x_1 x_2 x_3$$

   $$(iv) \quad WSR = 10\, x_1 + 4\, x_2 + 2\, x_3 - 4\, x_1 x_2 + 12\, x_1 x_3 + 4\, x_2 x_3$$
   $$- 18\, x_1 x_2 x_3,$$

   wherein CONV. represents the monomer conversion at the exemplified conditions relative to monomer intake being at least 99%, wherein $T_g$ represents the glass transition temperature being in the range of from 10 °C to 40 °C, and measured by D.S.C. (Differential Scanning Calorimetry), WA represents the water absorption value being at most 50% measured, WSR represents the water spot resistance being at least 5 after 24 hours, wherein $x_1$ rep-

resents the weight percentage of component (I), $x_2$ represents the weight percentage of component (II), $x_3$ represents the weight percentage of component (III), the values of $x_1$, $x_2$ and $x_3$ being calculated on the total weight of components (I), (II) and (III).

2.  Polymers according to claim 1, derivable from the components (I), (II) and (III) by emulsion polymerization in the presence of 2% by weight relative to the monomer weight of hydroxyethyl cellulose.

3.  Polymers according to claim 2, characterized in that they are derivable from comonomer mixtures, wherein the weight fractions $x_1$, $x_2$ and $x_3$ of the components (I), (II) and (III) simultaneously fulfil the equations (i) to (iv), wherein CONV. has a value of at least 99%, $T_g$ has a value in the range from 10 °C to 30 °C, WA has a value of at most 30% and wherein WSR has a value of at least 5.

4.  Polymers according to any one of claims 1 to 3, characterized in that they are derivable from a starting mixture of monomers comprising:

    (I) from 35 to 64% by weight of a vinyl ester of a branched chain carboxylic acid containing 10 carbon atoms in the chain;
    (II) from 19 to 49% by weight of vinyl pivalate;
    (II) from 8 to 40% by weight of vinyl acetate;

    the sum of components (I), (II) and (III) being 100%.

5.  A latex containing as polymeric constituent 30 to 60% by weight of a polymer according to any one of the claims 1 to 4.

6.  Coating compositions comprising a latex according to claim 5 and at least one pigment.

7.  A solid polymeric product formed by the physical drying of a latex according to claim 5.

**Claims for the following Contracting State : ES**

1.  Emulsion polymerization in the presence of a protecting colloid, of a starting comonomer mixture comprising:

    (I)     the vinyl ester of a tertiary aliphatic carboxylic acid in which the acid moiety contains 10 carbon atoms;
    (II)    vinyl pivalate;
    (III)   vinyl acetate;

    the amounts of components (I), (II) and (III), being calculated relative to the total weight of the sum of the amounts of these components, are simultaneously fulfilling the following equations, each describing compositions having equal performance contour lines in a triangle diagram:

    (i)     $CONV. = 99.0\,x_1 + 98.8\,x_2 + 99.2\,x_3 - 0.4\,x_1x_2 +$

    $$1.2\,x_1x_3 + 0.8\,x_2x_3 + 6\,x_1x_2x_3$$

    (ii)    $T_g = 66\,x_1 - 2\,x_2 + 40\,x_3 - 28\,x_1x_2 - 28\,x_1x_3$

    $$- 12\,x_2x_3 + 159\,x_1x_2x_3$$

    (iii)   $WA = 28\,x_1 + 18\,x_2 + 124\,x_3 - 20\,x_1x_2 - 240$

    $$x_1x_3 - 132\,x_2x_3 + 321\,x_1x_2x_3$$

$$(iv) \qquad WSR = 10\,x_1 + 4\,x_2 + 2\,x_3 - 4\,x_1 x_2 + 12\,x_1 x_3$$

$$+\, 4\,x_2 x_3 - 18\,x_1 x_2 x_3,$$

wherein CONV. represents the monomer conversion at the exemplified conditions relative to monomer intake being at least 99%, wherein $T_g$ represents the glass transition temperature being in the range of from 10 °C to 40 °C, and measured by D.S.C. (Differential Scanning Calorimetry), WA represents the water absorption value being at most 50% measured, WSR represents the water spot resistance being at least 5 after 24 hours, wherein $x_1$ represents the weight percentage of component (I), $x_2$ represents the weight percentage of component (II), $x_3$ represents the weight percentage of component (III), the values of $x_1$, $x_2$ and $x_3$ being calculated on the total weight of components (I), (II) and (III).

**2.** Polymerization according to claim 1, in the presence of 2% by weight relative to the monomer weight of hydroxyethyl cellulose.

**3.** Polymerization according to claim 2, characterized in that the weight fractions $x_1$, $x_2$ and $x_3$ of the components (I), (II) and (III) simultaneously fulfil the equations (i) to (iv), wherein CONV. has a value of at least 99%, $T_g$ has a value in the range from 10 °C to 30 °C, WA has a value of at most 30% and wherein WSR has a value of at least 5.

**4.** Polymerization according to any one of claims 1 to 3, characterized in that the starting mixture of monomers comprises:

(I) from 35 to 64% by weight of a vinyl ester of a branched chain carboxylic acid containing 10 carbon atoms in the chain;
(II) from 19 to 49% by weight of vinyl pivalate;
(II) from 8 to 40% by weight of vinyl acetate;

the sum of components (I), (II) and (III) being 100%.

**Patentansprüche**

**Patentansprüche für folgende Vertragsstaaten : BE, CH, LI, DE, FR, GB, IT, NL, PT, SE**

**1.** Polymerisate, erhältlich durch Emulsionspolymerisation einer Ausgangscomonomermischung aus:

(I) dem Vinylester einer tertiären aliphatischen Carbonsäure, in der der Säurerest 10 Kohlenstoffatome enthält;
(II) Vinylpivalat;
(III) Vinylacetat;

wobei die Mengen der Komponenten (I), (II) und (III), bezogen auf das Gesamtgewicht der Summe der Mengen dieser Komponenten berechnet, gleichzeitig die folgenden, jeweils Zusammensetzungen gleicher Leistungskonturlinien in einem Dreiecksdiagramm beschreibenden Gleichungen erfüllen:

$$(i) \qquad UMS. = 99{,}0\,x_1 + 98{,}8\,x_2 + 99{,}2\,x_3 - 0{,}4$$

$$x_1 x_2 + 1{,}2\,x_1 x_3 + 0{,}8\,x_2 x_3 + 6\,x_1 x_2 x_3$$

$$(ii) \qquad T_g = 66\,x_1 - 2\,x_2 + 40\,x_3 - 28\,x_1 x_2 - 28$$

$$x_1 x_3 - 12\,x_2 x_3 + 159\,x_1 x_2 x_3$$

(iii) $\quad WA = 28\,x_1 + 18\,x_2 + 124\,x_3 - 20\,x_1 x_2 -$

$$240\,x_1 x_3 - 132\,x_2 x_3 + 321\,x_1 x_2 x_3$$

(iv) $\quad WFB = 10\,x_1 + 4\,x_2 + 2\,x_3 - 4\,x_1 x_2 + 12\,x_1 x_3$

$$+ 4\,x_2 x_3 - 18\,x_1 x_2 x_3,$$

wobei UMS. den auf die Monomereinwaage bezogenen Monomerumsatz unter den beispielhaft angegebenen Bedingungen bedeutet und einen Wert von mindestens 99% hat; $T_g$ die Glasübergangstemperatur mit einem Wert im Bereich von 10 bis 40°C, gemessen mittels DSC (Differential Scanning Calorimetry); WA den gemessenen Wasseraufnahmewert von höchstens 50%, WFB die Wasserfleckbeständigkeit, die nach 24 Stunden mindestens 5 beträgt; $x_1$ den Gewichtsanteil der Komponente (I); $x_2$ den Gewichtsanteil der Komponente (II) und $x_3$ den Gewichtsanteil der Komponente (III) bedeuten, wobei die Werte von $x_1$, $x_2$ und $x_3$ bezogen auf das Gesamtgewicht der Komponenten (I), (II) und (III) berechnet sind,
in Gegenwart eines Schutzkolloids.

2. Polymerisate nach Anspruch 1, ableitbar aus den Komponenten (I), (II) und (III) durch Emulsionspolymerisation in Gegenwart von 2 Gew.-%, bezogen auf das Monomergewicht, Hydroxyethylcellulose.

3. Polymerisate nach Anspruch 2, dadurch gekennzeichnet, daß sie sich aus Comonomermischungen ableiten lassen, bei denen die Gewichtsanteile $x_1$, $x_2$ und $x_3$ der Komponenten (I), (II) und (III) gleichzeitig die Gleichungen (i) bis (iv) erfüllen, wobei UMS. einen Wert von mindestens 99%, $T_g$ einen Wert im Bereich von 10°C bis 30°C, WA einen Wert von höchstens 30% und WFB einen Wert von mindestens 5 hat.

4. Polymerisate nach einem der Ansprüche 1 bis 3, dadurch gekennzeichnet, daß sie sich aus einer Ausgangscomonomermischung aus:

(I) 35 bis 64 Gew.-% eines Vinylesters einer verzweigten Carbonsäure mit 10 Kohlenstoffatomen in der Kette;
(II) 19 bis 49 Gew.-% Vinylpivalat;
(II) 8 bis 40 Gew.-% Vinylacetat;

wobei die Summe der Komponenten (I), (II) und (III) 100% beträgt, ableiten lassen.

5. Latex, das als polymeren Bestandteil 30 bis 60 Gew.-% eines Polymerisats nach einem der Ansprüche 1 bis 4 enthält.

6. Beschichtungszusammensetzungen, enthaltend einen Latex nach Anspruch 5 und mindestens ein Pigment.

7. Festes, polymeres Produkt, gebildet durch physikalisches Trocknen eines Latex nach Anspruch 5.

**Patentansprüche für folgenden Vertragsstaat : ES**

1. Emulsionspolymerisation einer Ausgangscomonomermischung aus:

(I) dem Vinylester einer tertiären aliphatischen Carbonsäure, in der der Säurerest 10 Kohlenstoffatome enthält;
(II) Vinylpivalat;
(III) Vinylacetat;

wobei die Mengen der Komponenten (I), (II) und (III), bezogen auf das Gesamtgewicht der Summe der Mengen dieser Komponenten berechnet, gleichzeitig die folgenden, jeweils Zusammensetzungen gleicher Leistungskonturlinien in einem Dreiecksdiagramm beschreibenden Gleichungen erfüllen:

(i) $\quad$ UMS. = 99,0 $x_1$ + 98,8 $x_2$ + 99,2 $x_3$ - 0,4

$$x_1 x_2 + 1,2 \, x_1 x_3 + 0,8 \, x_2 x_3 + 6 \, x_1 x_2 x_3$$

(ii) $\quad$ $T_g$ = 66 $x_1$ - 2 $x_2$ + 40 $x_3$ - 28 $x_1 x_2$ - 28

$$x_1 x_3 - 12 \, x_2 x_3 + 159 \, x_1 x_2 x_3$$

(iii) $\quad$ WA = 28 $x_1$ + 18 $x_2$ + 124 $x_3$ - 20 $x_1 x_2$ -

$$240 \, x_1 x_3 - 132 \, x_2 x_3 + 321 \, x_1 x_2 x_3$$

(iv) $\quad$ WFB = 10 $x_1$ + 4 $x_2$ + 2 $x_3$ - 4 $x_1 x_2$ + 12 $x_1 x_3$

$$+ 4 \, x_2 x_3 - 18 \, x_1 x_2 x_3,$$

wobei UMS. den auf die Monomereinwaage bezogenen Monomerumsatz unter den beispielhaft angegebenen Bedingungen bedeutet und einen Wert von mindestens 99% hat; $T_g$ die Glasübergangstemperatur mit einem Wert im Bereich von 10 bis 40°C, gemessen mittels DSC (Differential Scanning Calorimetry); WA den gemessenen Wasseraufnahmewert von höchstens 50%, WFB die Wasserfleckbeständigkeit, die nach 24 Stunden mindestens 5 beträgt; $x_1$ den Gewichtsanteil der Komponente (I); $x_2$ den Gewichtsanteil der Komponente (II) und $x_3$ den Gewichtsanteil der Komponente (III) bedeuten, wobei die Werte von $x_1$, $x_2$ und $x_3$ bezogen auf das Gesamtgewicht der Komponenten (I), (II) und (III) berechnet sind,
in Gegenwart eines Schutzkolloids.

2. Polymerisation nach Anspruch 1 in Gegenwart von 2 Gew.-%, bezogen auf das Monomergewicht, Hydroxyethylcellulose.

3. Polymerisation nach Anspruch 2, dadurch gekennzeichnet, daß die Gewichtsanteile $x_1$, $x_2$ und $x_3$ der Komponenten (I), (II) und (III) gleichzeitig die Gleichungen (i) bis (iv) erfüllen, wobei UMS. einen Wert von mindestens 99%, $T_g$ einen Wert im Bereich von 10°C bis 30°C, WA einen Wert von höchstens 30% und WFB einen Wert von mindestens 5 hat.

4. Polymerisation nach einem der Ansprüche 1 bis 3, dadurch gekennzeichnet, daß die Ausgangscomonomermischung:

(I) $\quad$ 35 bis 64 Gew.-% eines Vinylesters einer verzweigten Carbonsäure mit 10 Kohlenstoffatomen in der Kette;
(II) $\quad$ 19 bis 49 Gew.-% Vinylpivalat;
(II) $\quad$ 8 bis 40 Gew.-% Vinylacetat;

wobei die Summe der Komponenten (I), (II) und (III) 100% beträgt, enthält.

## Revendications

## Revendications pour les Etats contractants suivants : BE, CH, LI, DE, FR, GB, IT, NL, PT, SE

1. Polymères que l'on peut obtenir par la polymérisation en émulsion, en présence d'un colloïde protecteur, à partir d'un mélange de comonomères de départ, comprenant :

(I) $\quad$ l'ester vinylique d'un acide carboxylique aliphatique tertiaire, dans lequel le groupement acide contient 10 atomes de carbone;

(II)     du pivalate de vinyle;

(III)     de l'acétate de vinyle,

les quantités des composants (I), (II) et (III) étant calculées par rapport au poids total de la somme des quantités de ces composés et satisfont simultanément les équations suivantes, chacune de ces équations décrivant des compositions ayant des lignes de contour de comportement égales dans un diagramme triangulaire :

$$(i) \quad CONV. = 99,0\, x_1 + 98,8\, x_2 + 99,2\, x_3 - 0,4\, x_1 x_2 + 1,2\, x_1 x_3$$
$$+ 0,8\, x_2 x_3 + 6\, x_1 x_2 x_3$$

$$(ii) \quad T_g = 66\, x_1 - 2\, x_2 + 40\, x_3 - 28\, x_1 x_2 - 28\, x_1 x_3$$
$$- 12\, x_2 x_3 + 159\, x_1 x_2 x_3$$

$$(iii) \quad WA = 28\, x_1 + 18\, x_2 + 124\, x_3 - 20\, x_1 x_2 - 240\, x_1 x_3$$
$$- 132\, x_2 x_3 + 321\, x_1 x_2 x_3$$

$$(iv) \quad WSR = 10\, x_1 + 4\, x_2 + 2\, x_3 - 4\, x_1 x_2 + 12\, x_1 x_3 + 4\, x_1 x_3$$
$$- 18\, x_1 x_2 x_3$$

où CONV. représente la conversion des monomères dans les conditions illustrées par rapport au monomère d'entrée, d'au moins 99%, où $T_g$ représente la température de transition vitreuse qui se situe dans la plage de 10°C à 40°C, telle que mesurée par C.E.D (Calorimétrie à exploration différentielle), WA représente la valeur d'absorption d'eau d'au plus 50% mesurée, WSR se rapporte à la résistance au maculage par l'eau d'au moins 5 après 24 heures, où $x_1$ représente le pourcentage pondéral du composant (I), $x_2$ représente le pourcentage pondéral du composant (II), $x_3$ représente le pourcentage pondéral du composant (III), les valeurs de $x_1$, $x_2$ et $x_3$ étant calculées sur le poids total des composants (I), (II) et (III).

2. Polymères suivant la revendication 1, qui dérivent des composants (I), (II) et (III) par polymérisation en émulsion en présence de 2% en poids, par rapport au poids des monomères, d'hydroxyéthylcellulose.

3. Polymères suivant la revendication 2, caractérisés en ce qu'ils dérivent de mélanges de comonomères, dans lesquels les fractions pondérales $x_1$, $x_2$ et $x_3$ de ces composants (I), (II) et (III) se conforment simultanément aux équations (i) à (iv), où CONV. possède toujours une valeur d'au moins 99%, $T_g$ a une valeur qui fluctue de 10°C à 30°C, WA a une valeur d'au maximum 30% et où WSR a une valeur d'au moins 5.

4. Polymères suivant l'une quelconque des revendications 1 à 3, caractérisés en ce qu'on peut les obtenir à partir d'un mélange initial de monomères comprenant :

(I) de 35 à 64% en poids d'un ester vinylique d'un acide carboxylique à chaîne ramifiée contenant 10 atomes de carbone dans la chaîne;
(II) de 19 à 49% en poids de pivalate de vinyle;
(III) de 8 à 40% en poids d'acétate de vinyle, la somme des composants (I), (II) et (III) formant 100%.

5. Latex contenant, à titre de constituant polymérique, 30 à 60% en poids d'un polymère suivant l'une quelconque des revendications 1 à 4.

6. Compositions de revêtement comprenant un latex suivant la revendication 5 et au moins un pigment.

7. Produit polymérique solide formé par le séchage physique d'un latex suivant la revendication 5.

**EP 0 513 889 B1**

**Revendications pour l'Etat contractant suivant : ES**

1. Polymérisation en émulsion, en présence d'un colloïde protecteur, à partir d'un mélange initial de comonomères comprenant :

    (I)      l'ester vinylique d'un acide carboxylique aliphatique tertiaire, dans lequel le groupement acide contient 10 atomes de carbone;
    (II)      du pivalate de vinyle;
    (III)      de l'acétate de vinyle,

les quantités des composants (I), (II) et (III) étant calculées par rapport au poids total de la somme des quantités de ces composés et satisfont simultanément les équations suivantes, chacune de ces équations décrivant des compositions ayant des lignes de contour de comportement égales dans un diagramme triangulaire :

$$(i) \quad CONV. = 99,0\, x_1 + 98,8\, x_2 + 99,2\, x_3 - 0,4\, x_1 x_2 + 1,2\, x_1 x_3$$
$$+ 0,8\, x_2 x_3 + 6\, x_1 x_2 x_3$$

$$(ii) \quad T_g = 66\, x_1 - 2\, x_2 + 40\, x_3 - 28\, x_1 x_2 - 28\, x_1 x_3$$
$$- 12\, x_2 x_3 + 159\, x_1 x_2 x_3$$

$$(iii) \quad WA = 28\, x_1 + 18\, x_2 + 124\, x_3 - 20\, x_1 x_2 - 240\, x_1 x_3$$
$$- 132\, x_2 x_3 + 321\, x_1 x_2 x_3$$

$$(iv) \quad WSR = 10\, x_1 + 4\, x_2 + 2\, x_3 - 4\, x_1 x_2 + 12\, x_1 x_3 + 4\, x_2 x_3$$
$$- 18\, x_1 x_2 x_3$$

où CONV. représente la conversion des monomères dans les conditions illustrées par rapport au monomère d'entrée, d'au moins 99%, où $T_g$ représente la température de transition vitreuse qui se situe dans la plage de 10°C à 40°C, telle que mesurée par C.E.D (Calorimétrie à exploration différentielle), WA représente la valeur d'absorption d'eau d'au plus 50% mesurée, WSR se rapporte à la résistance au maculage par l'eau d'au moins 5 après 24 heures, où $x_1$ représente le pourcentage pondéral du composant (I), $x_2$ représente le pourcentage pondéral du composant (II), $x_3$ représente le pourcentage pondéral du composant (III), les valeurs de $x_1$, $x_2$ et $x_3$ étant calculées sur le poids total des composants (I), (II) et (III).

2. Polymérisation suivant la revendication 1, réalisée en présence de 2% en poids, par rapport au poids des monomères, d'hydroxyéthylcellulose.

3. Polymérisation suivant la revendication 2, caractérisée en ce que le poids des fractions pondérales $x_1$, $x_2$ et $x_3$ de ces composants (I), (II) et (III) se conforment simultanément aux équations (i) à (iv), où CONV. possède toujours une valeur d'au moins 99%, $T_g$ a une valeur qui fluctue de 10°C à 30°C, WA a une valeur d'au maximum 30% et où WSR a une valeur d'au moins 5.

4. Polymérisation suivant l'une quelconque des revendications 1 à 3, caractérisée en ce que le mélange initial des monomères comprend :

    (I)      de 35 à 64% en poids d'un ester vinylique d'un acide carboxylique à chaîne ramifiée contenant 10 atomes de carbone dans la chaîne;
    (II)      de 19 à 49% en poids de pivalate de vinyle;
    (III)      de 8 à 40% en poids d'acétate de vinyle,

la somme des composants (I), (II) et (III) formant 100%.

The shaded area represents the
starting comonomer compositions
containing :
VeoVa 5 – VeoVa 10 – Vinyl acetate

FIG.1

The shaded area represents the
preferred starting comonomer
compositions containing :
VeoVa 5 – VeoVa 10 – Vinyl acetate

*FIG.2*